# EUROPEAN PATENT APPLICATION

(11) **EP 4 711 039 A1**
(43) Date of publication of application: **18.03.2026**
(21) Application number: 25202375.9
(22) Date of filing: 16.09.2025
(51) Int. Cl.: B01L 3/00

(54) **MICROFLUIDIC DEVICE AND METHOD OF MANUFACTURE THEREOF**

(30) Priority: 17.09.2024 LU 103385
(71) Applicant: Stratec Consumables GmbH, 5081 Anif (AT)
(72) Inventor: Putz, Florian, 5081 Anif (AT); Aichinger, Gottfried, 5081 Anif (AT); Salajegheh, Yasaman, 5081 Anif (AT); Pitzek, Maximilian, 5081 Anif (AT)
(74) Representative: Tegethoff, Sebastian

(57) **Abstract**

This disclosure provides a microfluidic device comprising a first and a second substrate, at least one of first and second substrate having one or more microfluidic formations; and a coating arranged at least partially between first and second substrate, wherein a facing area between first and second substrate without microfluidic formations comprises a coating detection spot. Another aspect of the present disclosure relates to a method for detecting a coating of a microfluidic device, comprising the steps of providing a first and second substrate, wherein at least one of first and second substrate comprises microfluidic formations; providing a coating at least partially between first and second substrate, wherein a facing area between first and second substrate without microfluidic formations comprises a coating detection spot; bonding of first and second substrate; and visual inspection for the presence of bonding voids in the area between first and second substrate without microfluidic formations comprising a coating detection spot

## Description

### Field of the Disclosure

This disclosure relates to microfluidic devices and methods for manufacturing microfluidic devices.

### Description of the Related Art

STRATEC^{®} Consumables GmbH is a manufacturer of smart polymer-based consumables like microfluidic devices for the in-vitro diagnostics, life sciences and medical technology industries and has developed a unique combination of skills including nano- and microstructuring, coating technologies, polymer sciences and automated assembly.

Microfluidic devices are used for fluid manipulation at a small-scale. Fluids are manipulated in a microfluidic device within microfluidic channels or other microfluidic formations, which are formations provided in a structure of one or more layers by etching, molding, laser cutting, milling, hot embossing or lithographic processes.

Microfluidic devices are manufactured by direct or indirect bonding of at least two substrates. Direct bonding means to permanently bond the at least two substrates without any additional materials or layers. Indirect bonding uses an intermediate material which is arranged between the two substrates.

Microfluidic devices are also formed by chemically bonding a film to a substrate comprising the microfluidic formations. The films and substrates may be functionalized with surface coatings, e.g. in areas where such a functionalization is required comprising channels.

Such surface coatings prevent chemical bonding between the substrates of the microfluidic device. The thin film, which is usually applied in their fabrication, introduces a layer of foreign material between the surfaces of the substrates which need to be bonded. So called "bonding voids" occur in the coated areas, which are pockets of air that remain between the two bonded surfaces of the substrates.

Thin film surface coatings are not visible to the naked eye and are even not detectable by optical microscopy. Accordingly, it is not possible to implement a simple quality check to verify whether the substrates of a microfluidic device have been coated or not. In a realistic manufacturing environment, it is possible for single pieces (out of a larger manufacturing batch) to not receive any surface coating treatment, e.g. due to human handling error, undetected machine failure, undetected automation flaws, etc.

Possible methods for characterizing the existence or lack of a surface coating include surface contact angle measurements, fluorescence imaging, and ellipsometry measurements. These methods are all time consuming and it is practically not possible to implement them on a 100% check rate basis. In addition, these characterization methods have a negative impact on the stability of the coating and final product shelf life. The first method is also a destructive test and as such not appropriate.

Published US patent application US 2019/232285 A1 discloses thin film valve apparatus and a method thereof relating to the on/off control system of a fluid hole using a thin film closing membrane for controlling the flow or the flow rate of a fluid, more particularly the fluid hole and the fluid path are opened or closed by melting the thin film closing membrane with a heat from heating generator. A thin film adhesive tape of the fluid hole closing membrane is a metal coated thin film adhesive tape or black paint that includes a plurality of micro heating particle that absorb energy of the laser beam.

By the time a coating manufacturing run is completed, it is not possible with existing means to filter out single uncoated pieces with a reasonable effort. Thus, there is a need for a method that allows to easily detect whether the substrates have been coated or not.

### Summary of the Technology

This disclosure provides a microfluidic device comprising a first and a second substrate, at least one of first and second substrate having one or more microfluidic formations; and a transparent coating arranged at least partially between first and second substrate, wherein a facing area between first and second substrate without microfluidic formations comprises the transparent coating.

It is intended in an embodiment that the material of the transparent coating of the microfluidic device is made of dielectric material.

The dielectric material is selected in embodiments from dielectric materials like for example SiO₂, SiOₓ, SiN, ZnS, Ta₂O₅, MgF₂, TiO₂ and Al₂O₃.

The transparent coating is in an embodiment a result of ion plasma treatment.

It is intended for a microfluidic device according to the present disclosure that the transparent coating is applied to a substrate with a microfluidic formation.

Another aspect of the present disclosure relates to a microfluidic device, wherein the coating is also applied to the facing area of a microfluidic formation in the respective opposite substrate.

The microfluidic device comprises in an embodiment a transparent coating which has a thickness in a range between 1 -200 nm.

The microfluidic device comprises in an embodiment a transparent coated surface which is chemically or thermally bonded to first and/or second substrate.

Another aspect of the present disclosure relates to a method for detecting a coating of a microfluidic device, comprising the steps of:
- providing a first and second substrate, wherein at least one of first and second substrate comprises microfluidic formations;
- providing a transparent coating at least partially between first and second substrate, wherein a facing area between first and second substrate without microfluidic formations comprises the transparent coating;
- bonding of first and second substrate;
- visual inspection for the presence of bonding voids in the area between first and second substrate without microfluidic formations comprising the transparent coating.

The method comprises in an embodiment the step of visual inspection which is done by bright field microscopy.

Another aspect of the disclosed method relates to the material of the transparent coating comprising dielectric material, wherein the dielectric material is selected in embodiments from the group comprising SiO₂, SiOₓ, SiN, ZnS, Ta₂O₅, MgF₂, TiO₂ and Al₂O₃.

The disclosed method further comprises the transparent coating which is applied by ion plasma treatment.

It is to be understood that both the foregoing general description and the following detailed description are exemplary, but not restrictive of, the present disclosure

### Brief Description of the Drawings

A more complete appreciation of the disclosure and many of the attendant advantages thereof will be readily obtained as the same becomes better understood by reference to the following detailed description when considered in connection with the accompanying drawings, wherein:
FIG 1A shows schematically a sectional view through an embodiment of a microfluidic device according to the present disclosure prior to bonding of first and second substrate indicating a surface coating.
FIG. 1B shows schematically a sectional view through an embodiment of a microfluidic device according to the present disclosure after bonding of first and second substrate indicating a bonding void between the two substrates.
FIG. 2A shows an image from optical microscopy of a bonded microfluidic device.
FIG. 2B shows a fluorescence scan of the microfluidic device shown in FIG. 2A.
FIG. 3 shows an embodiment of a bonded microfluidic chip

### Detailed Description of the Disclosure

The technical problem is solved by the independent claims. The dependent claims cover further specific embodiments of the disclosure.

An example of a microfluidic device includes first and second outer layers of two substrates, wherein a first one of said first and second outer layers of a first substrate comprising one or more microfluidic formations. The second one of said first and second outer layers belongs to a second substrate which is to be bonded to the first outer layer. One or two of the two outer layers is coated with a thin film which after bonding is situated between the first and second outer layer.

A problem which can occur during manufacture of such a microfluidic device is to reliably control whether the substrates were surface coated or not because the coating is not visible with the eye or in optical microscopy. The present disclosure provides a solution for detection the presence of transparent coatings more easily.

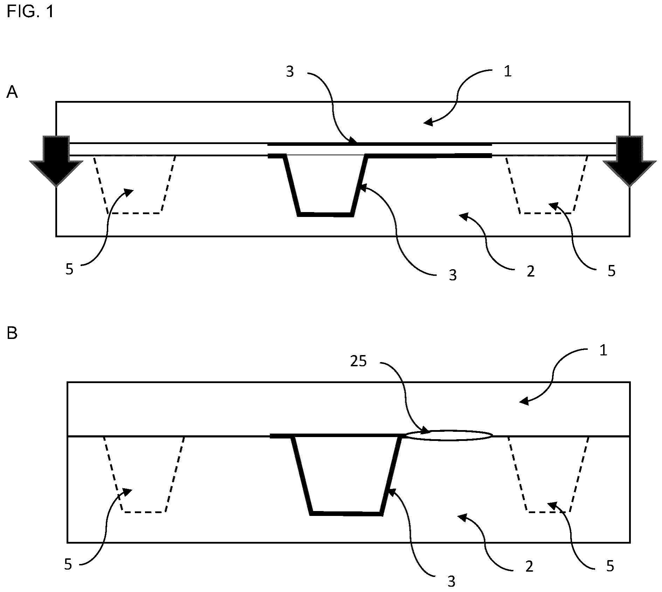

FIG. 1A shows schematically a sectional view through an embodiment of a microfluidic device according to the present disclosure prior to bonding of first and second substrate 1, 2 indicating areas with a surface coating 3. The arrows indicate the direction of moving the first substrate 1 towards second substrate 2 for bonding. The embodiment shown in FIG. 1A and FIG. 1B provides microfluidic formations 5 in the second substrate 2.

FIG. 1B shows schematically a sectional view through an embodiment of a microfluidic device according to the present disclosure after bonding of first and second substrate 1, 2 indicating a bonding void 25 in the area with coating 3.

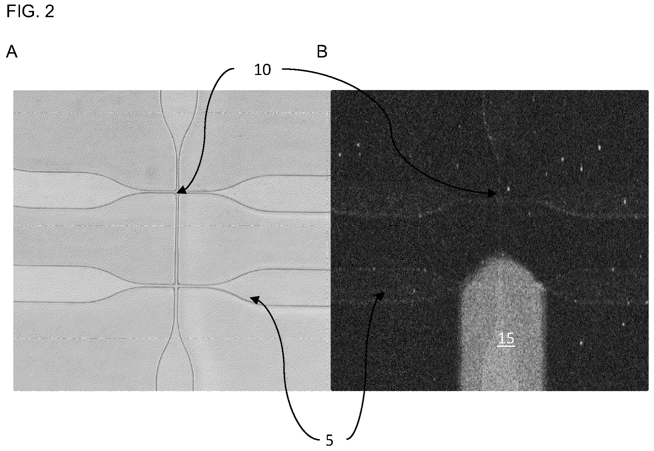

FIG. 2A shows in a top view a bright field microscopy picture of a coated and bonded microfluidic device. Microfluidic formations 5 and junctions 10 are visible. The applied coating of the substrates is not visible via conventional, bright field imaging. It takes less than a minute (potentially less than ten seconds if done in an automated way), to generate such a picture, however, the coating is transparent and therefore not distinguishable from the rest of the image.

FIG. 2B shows an image of the same microfluidic device shown in FIG. 1A showing microfluidic formations 5 in a fluorescence scanner. The coated area 15 is clearly visible. However, it takes several minutes to generate such a picture, and it is very costly to implement such a check in automated systems.

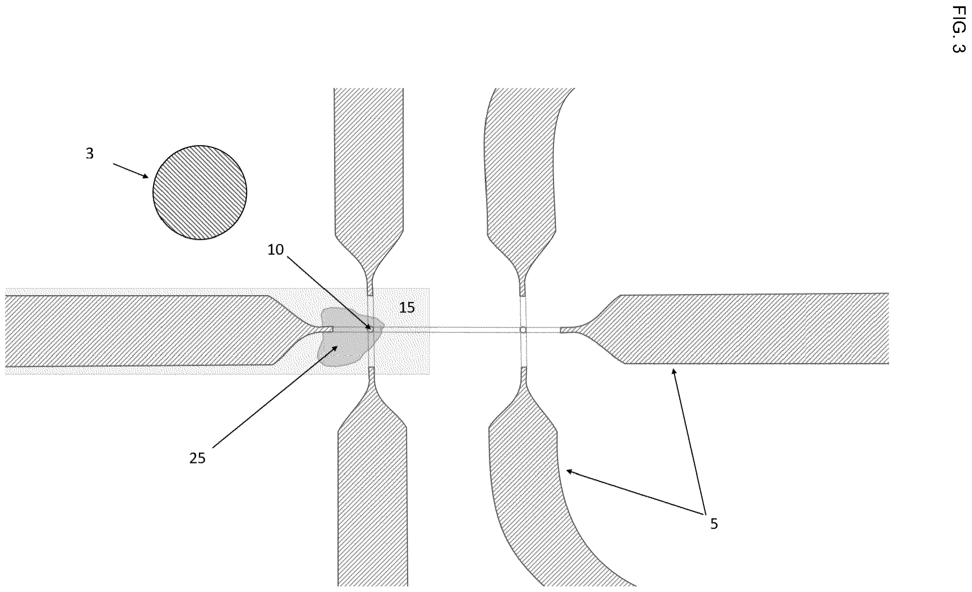

FIG. 3 shows in a top view in detail a bonded microfluidic device with microfluidic formations 5 showing a bonding void 25 which represents a defect in a coated area 15 at junction 10, as a result from the coating (not visible) being present in this region. Even in bright field microscopy images, the bonding voids 25 are clearly visible in the form of bright spots with color grading resulting from interference fringes. Transparent coating 3 indicates that the bonded microfluidic device comprises a coating so that the bonding voids can be assigned to a defect in the coating.

The present disclosure makes use of the visibility of bonding voids in bright field microscopy and deliberately induces bonding voids in areas that are not critical for the functionality of a microfluidic device by adding coatings to regions where they are not required within the meaning of requiring a functionalization of the microfluidic device or the respective microfluidic formation in that area. The existence of bonding voids in regions without requiring the coating will merely be used to indicate whether a coating is present or not. The absence of bonding voids in such defined regions in bright field microscopy is interpreted as a lack of coating.

The circle in FIG. 3 marks a region where a transparent coating 3 is applied to the microfluidic device without requiring the coating in that area for the functionality of a microfluidic device. During fabrication of the first and/or second substrate, the respective region is uncovered so that the coating for functionalization is applied to said region. This so-called coating detection spot in an area without relevance for the purpose of the microfluidic device serves merely as an indicator. The implementation of the coating detection spot is an efficient and easy method of adding an opening to the mask for coating of first and/or second substrate which is applied prior to providing the functionalization to the substrate that will create an additional coated area.

The coating detection spot allows to use the eye or bright field microscopy for checking whether a coating has been applied on the substrates. It will be reliably possible to check for thin film coatings in short time without requiring time-consuming and more expensive test methods like a fluorescence scan.

An example range of thicknesses applicable to the definition for the coating or thin film is in a range between 1 - 200 nm. Each or at least one of the substrates includes one or more microfluidic formations such as microfluidic channels. Example dimensions of the microfluidic channels are a channel depth in a range between 1 - 300 µm.

It is intended to use as a material for the coating detection spot a dielectric material. The dielectric material for the coating detection spot can be selected from the group comprising SiO₂, SiOₓ, SiN, ZnS, Ta₂O₅, MgF₂, TiO₂ and Al₂O₃.

The purpose of a functionalization according to the present disclosure is to modify the chemical properties of the microfluidic plastic chips' surfaces. Most common uses are a) to change the surface contact angle, i.e. creating hydrophilic surfaces, while the base plastic material would be hydrophobic, potentially in a specific pattern to create both hydrophobic and hydrophilic regions within one microfluidic network, or b) to form a chemically reactive surface where subsequent biochemical coatings may be attached to, e.g. amino-silanes, which then in turn serve as a substrate for further coatings that eventually bind capture antibodies to the surfaces, e.g. through NHS ester chemistries, and Streptavidin - Biotin interactions.

The most common material for these functionalization coatings is SiO2, i.e. glass, mostly because it fulfills the chemical requirements and is closest to standard labware equipment, which is made of glass. Also, the transparency is often a functional requirement as it enables transmission microscopy applications, where e.g. cells or proteins are optically detected. However, other types of dielectric thin film coatings are used as well and fulfill the same application requirements. Furthermore, other types of surface functionalization exist that can be used in a similar way, some examples being metal-ion polymer coatings, or ion plasma treatment steps.

Examples of suitable materials for the substrates include cyclo-olefin-polymer (COP), cyclo-olefin-copolymer (COC), polycarbonate (PC), polymethylmethacrylate (PMMA) and polystyrene (PS).

The dimensions of the microfluidic device are in a range from 10 x 20 mm to 85 x 125 mm, with a thickness between 0.6 mm to 14 mm.

The foregoing description of preferred and other embodiments is not intended to limit or restrict the scope or applicability of the inventive concepts. It will be appreciated with the benefit of the present disclosure that features described above in accordance with any embodiment or aspect of the disclosed subject matter can be utilized, either alone or in combination, with any other described feature, in any other embodiment or aspect of the disclosed subject matter.

### Reference Numerals

- 1: first substrate
- 2: second substrate
- 3: coating
- 5: microfluidic formation
- 10: junction
- 15: coated area
- 25: bonding void

## Claims

1. A microfluidic device comprising a first and a second substrate, at least one of first and second substrate having one or more microfluidic formations, and a transparent coating arranged at least partially between first and second substrate, wherein a facing area between first and second substrate without microfluidic formations comprises the transparent coating.

2. The microfluidic device according to claim 1, wherein the material of the transparent coating comprises dielectric materials.

3. The microfluidic device of claim 2, wherein the dielectric material is selected from the group comprising SiO₂, SiOₓ, SiN, ZnS, Ta₂O₅, MgF₂, TiO₂ and Al₂O₃.

4. The microfluidic device according to claim 1, wherein the transparent coating is a result of ion plasma treatment.

5. The microfluidic device according to any one of claims 1 to 4, wherein the transparent coating is applied to a substrate with microfluidic formations.

6. The microfluidic device according to claim 5, wherein the transparent coating is also applied to the facing area of a microfluidic formation in the respective opposite substrate.

7. The microfluidic device of any one of claims 1 to 6, wherein the transparent coating has a thickness in a range between 1 -200 nm.

8. The microfluidic device of any one of claims 1 to 7, wherein the transparent coated surface is chemically or thermally bonded to first and/or second substrate.

9. A method for detecting a coating of a microfluidic device, comprising the steps of:
- providing a first and second substrate, wherein at least one of first and second substrate comprises microfluidic formations;
- providing a transparent coating at least partially between first and second substrate, wherein a facing area between first and second substrate without microfluidic formations comprises the transparent coating;
- bonding of first and second substrate;
- visual inspection for the presence of bonding voids in the area between first and second substrate without microfluidic formations where the transparent coating is applied.

10. The method of claim 9, wherein the visual inspection is done by bright field microscopy.

11. The method of claim 9 or 10, wherein the material of the transparent coating comprises dielectric material.

12. The method of claim 11, wherein the dielectric material is selected from the group comprising SiO₂, SiOₓ, SiN, ZnS, Ta₂O₅, MgF₂, TiO₂ and Al₂O₃.

13. The method of claim 9 or 10, wherein the transparent coating is applied by ion plasma treatment.
